# FASCICULE DE BREVET EUROPEEN

(11) **EP 3 222 074 B1**
(45) Date de publication et mention de la délivrance du brevet: **07.01.2026**
(21) Numéro de dépôt: 15804905.6
(22) Date de dépôt: 19.11.2015
(51) Int. Cl.: H04W 12/37, H04W 12/50, H04W 12/06, H04L 12/46, H04W 84/12, H04W 4/06

(54) **PROCEDE DE CONFIGURATION D'UN EQUIPEMENT MULTIMEDIA DESTINE A ETRE CONNECTE A UN EQUIPEMENT D'INTERCONNEXION**
VERFAHREN ZUR KONFIGURATION EINER MULTIMEDIAVORRICHTUNG ZUR VERBINDUNG MIT EINER VERBINDUNGSVORRICHTUNG
METHOD OF CONFIGURING A MULTIMEDIA DEVICE INTENDED TO BE CONNECTED TO AN INTERCONNECTION DEVICE

(30) Priorité: 20.11.2014 FR 1461259
(43) Date de publication de la demande: 27.09.2017
(73) Titulaire: Orange, 92130 Issy-les-Moulineaux (FR)
(72) Inventeur: VINCENT, Yoann, 94230 Cachan (FR); BRICHETEAU, Dimitri, 35000 Rennes (FR)
(74) Mandataire: Cabinet Beau de Loménie
(86) Numéro de dépôt international: PCT/FR2015/053140
(87) Numéro de publication internationale: WO 2016/079442

(56) Documents cités:
- EP-A2- 2 658 334
- WO-A1-2014/014457
- WO-A1-2015/116593
- WO-A2-2006/106393
- WO-A2-2012/052660
- US-A1- 2012 317 619

## Description

L'invention se situe dans le domaine des télécommunications, et plus particulièrement dans le domaine des réseaux domestiques.

Avec l'essor des équipements portables tels que les smartphones et autres tablettes numérique ainsi que la dématérialisation des contenus tels que des morceaux de musique, des films, ou encore des photographies, les utilisateurs de tels équipements prennent l'habitude de partager ces contenus.

Ainsi, un utilisateur souhaitant partager des contenus multimédia stockés dans l'un de ses équipements peut être amené à autoriser la connexion de cet équipement à son réseau domestique, tel que le réseau WIFI (*Wireless Fidelity*) généré par sa passerelle domestique, telle qu'une Livebox^{®} par exemple. Lorsque l'équipement autorisé à se connecter au réseau domestique de l'utilisateur appartient également à l'utilisateur, cela ne pose pas de problème de sécurité ou de confidentialité.

Lorsque l'équipement que l'on souhaite connecter n'appartient pas à l'utilisateur du réseau domestique mis à un visiteur, il est souhaitable que cet équipement se connecte via un autre réseau afin de préserver la sécurité et la confidentialité des informations pouvant être récupérée via le réseau domestique, et notamment la confidentialité du code d'accès au réseau domestique lorsque celui-ci est un réseau sans fil. Ainsi, certaines passerelles domestiques permettent de créer un réseau domestique visiteur distinct du réseau domestique permettant ainsi la connexion d'équipements n'appartenant pas à l'utilisateur de la passerelle domestique.

De même que les équipements portables et la dématérialisation des contenus se sont développés, les équipements domestiques connectés tendent à être de plus en plus nombreux. Ainsi, il est courant que les téléviseurs ou autres chaines HiFi (*High Fidelity*) soient connectés à Internet via la passerelle domestique et fassent partie du réseau domestique.

Afin de faciliter la connexion de ces différents équipements connectés et équipements domestiques au réseau domestique, un équipement multimédia a été créé.

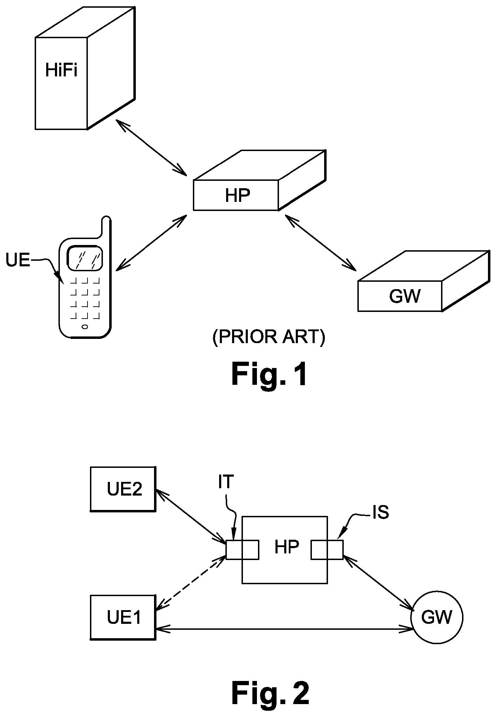

Un tel équipement multimédia est connecté à la passerelle domestique, permet de créer un réseau visiteur distinct du réseau domestique et permettant la connexion d'équipements domestiques connectés. Un tel équipement multimédia HP est représenté à la **figure 1****.** L'équipement multimédia HP est connecté à une passerelle domestique GW soit de manière filaire à l'aide d'un câble Ethernet par exemple, soit au moyen d'une connexion sans fil de type WIFI par exemple. L'équipement multimédia HP peut se situer dans une autre pièce que la passerelle domestique et permettre ainsi la connexion à la passerelle d'équipements distants, tels que par exemple la chaine HiFi.

L'équipement multimédia HP peut également générer un réseau WIFI visiteur distinct du réseau WIFI généré par la passerelle domestique. Un équipement UE appartenant à un visiteur peut ainsi se connecter au réseau WIFI visiteur et partager des contenus multimédia stockés dans une mémoire avec l'un des équipements de l'utilisateur connectés à l'équipement multimédia HP directement ou via la passerelle domestique GW.

Un tel équipement multimédia HP pouvant réaliser de nombreuses fonctions, il dispose d'un module de configuration. L'équipement multimédia HP comprend deux interfaces permettant d'accéder au module de configuration, une interface de service vers la passerelle domestique GW et une interface de terminal vers les équipements visiteurs UE.

L'utilisateur de l'équipement multimédia HP peut accéder de manière sécurisée au module de configuration de l'équipement multimédia HP via la passerelle domestique GW. En effet, un équipement de l'utilisateur permettant d'accéder au module de configuration de l'équipement multimédia étant également connecté à la passerelle domestique GW accède à ce module de configuration de manière sécurisée, la passerelle domestique GW ayant authentifié l'équipement de l'utilisateur et l'équipement multimédia HP.

Dans le cas où l'équipement multimédia HP est utilisé en situation de nomadisme, c'est-à-dire qu'il n'est plus connecté à la passerelle domestique GW, l'utilisateur de l'équipement multimédia se retrouve dans l'impossibilité d'accéder au module de configuration de l'équipement multimédia HP.

La demande européenne publiée sous le numéro EP 2 658 334 A2 décrit un système de connexion sans fil entre des premier et deuxième équipements électroniques. La demande US 2012/317619 A1 décrit un procédé pour établir une connexion entre un dispositif client et un dispositif hôte donnant accès à un réseau comme par exemple Internet et formant ainsi un équipement multimédia. Cette connexion s'effectue via un point d'accès virtuel instancié par ledit dispositif hôte.

Un des buts de l'invention est de remédier à des inconvénients de l'état de l'art en proposant une solution permettant un accès sécurisé au module de configuration de l'équipement multimédia lorsque l'interface de service est inutilisable.

L'invention est définie par les revendications indépendantes.

A cette fin, l'invention propose un procédé de configuration d'un équipement multimédia destiné à être connecté à un équipement d'interconnexion auprès duquel il est authentifié, et à au moins un terminal, ledit équipement multimédia comportant une interface de service vers l'équipement d'interconnexion et une interface de terminal vers ledit terminal, caractérisé en ce qu'il comporte au cours d'une phase d'initialisation :
- une étape de réception, au travers de l'interface de service, d'une première requête émise par le terminal pour obtenir un paramètre d'identification autorisant un accès à un module de configuration de l'équipement multimédia, ledit terminal étant authentifié auprès de l'équipement d'interconnexion,
- une étape de transmission, au travers de l'interface de service, d'un message à destination du terminal comprenant le paramètre d'identification requis,
et en ce qu'il comporte au cours d'une phase de configuration de l'équipement multimédia :
- une étape d'identification de l'interface par laquelle une deuxième requête émise par le terminal pour accéder au module de configuration est reçue,
- lorsque la seconde requête est reçue au travers de l'interface de terminal, une étape d'émission, au travers de l'interface de terminal, d'une troisième requête, à destination du terminal, de transmission du paramètre d'identification,
- une étape de réception, au travers de l'interface de terminal, d'un message émis par le terminal comprenant ledit paramètre d'identification.

Un équipement multimédia est connecté à un équipement d'interconnexion, tel qu'une passerelle domestique. Au cours de l'établissement de la connexion entre l'équipement d'interconnexion et l'équipement multimédia, l'équipement multimédia s'authentifie auprès de l"équipement d'interconnexion. Un terminal, tel qu'un terminal mobile ou une tablette par exemple, est également connecté à l"équipement d'interconnexion. Au cours de l'établissement de la connexion entre l'équipement d'interconnexion et le terminal, le terminal s'authentifie auprès de l"équipement d'interconnexion.

Ainsi, une relation de confiance est établie entre l'équipement d'interconnexion et l'équipement multimédia et entre l'équipement d'interconnexion et le terminal, permettant l'échange d'informations sensibles telles que des paramètres d'identification par exemple.

Le procédé objet de l'invention permet à un utilisateur d'un terminal d'accéder de manière automatique et sécurisée à un module de configuration de l'équipement multimédia.

En effet, l'équipement multimédia comprend deux interfaces au travers desquelles il peut échanger des messages avec d'autres équipements. La première interface, dite interface de service, permet d'échanger des messages avec l'équipement d'interconnexion. La deuxième interface, dire de terminal, permet à l'équipement multimédia d'échanger des messages avec des terminaux. Au cours de l'établissement d'une connexion entre l'équipement multimédia et le terminal, le terminal ne s'authentifie pas auprès du terminal.

Ainsi, afin de permettre à l'utilisateur d'un terminal d'accéder au module de configuration du terminal de manière sécurisée au travers de l'interface de service, par exemple lorsque l'équipement de service est en situation de nomadisme, c'est à dire lorsqu'il n'est pas connecté avec l'équipement d'interconnexion, le terminal doit préalablement requérir des paramètres d'identification permettant d'accéder au module de configuration de l'équipement de service au travers de l'interface de terminal.

Le terminal requiert les paramètres d'identification permettant l'accès au module de configuration de l'équipement multimédia via l'équipement d'interconnexion. L'équipement d'interconnexion étant connecté de manière sécurisée aussi bien avec l'équipement multimédia qu'avec le terminal, l'équipement multimédia transfert les paramètres d'identification requis.

Lorsque le terminal envoie une requête en vue d'accéder au module de configuration de l'équipement multimédia au travers de l'interface de terminal, l'équipement multimédia requiert la transmission des paramètres d'identification reçus par le terminal. Une fois ces paramètres fournir, le terminal peut accéder au module de configuration de l'équipement multimédia de manière sécurisée.

Une telle méthode est transparente pour l'utilisateur car tous les échanges sont réalisés entre les différents équipements impliqués de manière automatique. De même, une telle méthode permet à tout terminal de se connecter à l'équipement multimédia mis seul un terminal étant en possession de paramètres d'identification permettant l'accès au module de configuration de l'équipement multimédia peut configurer ce dernier.

L'invention concerne encore un procédé de communication entre un terminal et un équipement multimédia, ledit équipement multimédia comportant une interface de terminal vers ledit terminal, caractérisé en ce qu'il comporte au cours d'une phase d'initialisation :
- une étape d'émission, à destination de l'équipement multimédia, d'une première requête pour obtenir un paramètre d'identification autorisant un accès à un module de configuration de l'équipement multimédia, ladite première requête étant transmise à l'équipement multimédia via un équipement intermédiaire auquel il est connecté,
- une étape de réception d'un message émis par l'équipement multimédia comprenant le paramètre d'identification requis, ledit message étant transmis au terminal via l'équipement intermédiaire auquel il est connecté,
et en ce qu'il comporte au cours d'une phase de configuration de l'équipement multimédia :
- une étape d'émission, vers l'équipement multimédia, d'une seconde requête pour accéder au module de configuration, ladite seconde requête étant reçue au travers de l'interface de terminal,
- une étape de réception d'une troisième requête de transmission du paramètre d'identification émise pas l'équipement multimédia,
- une étape d'émission d'un message émis comprenant ledit paramètre d'identification, ledit message étant reçu au travers de l'interface de terminal.

Un autre objet de l'invention concerne un équipement multimédia destiné à être connecté à un équipement d'interconnexion auprès duquel il est authentifié, et à au moins un terminal, ledit équipement multimédia comportant une interface de service vers l'équipement d'interconnexion et une interface de terminal vers ledit terminal, caractérisé en ce qu'il comporte :
- un récepteur connecté à l'interface de service, destiné à recevoir une première requête émise par le terminal pour obtenir un paramètre d'identification autorisant un accès à un module de configuration de l'équipement multimédia, ledit terminal étant authentifié auprès de l'équipement d'interconnexion,
- un émetteur connecté à l'interface de service, destiné à émettre un message à destination du terminal comprenant le paramètre d'identification requis,
- un module d'identification de l'interface par laquelle une deuxième requête émise par le terminal pour accéder au module de configuration est reçue,
- un émetteur connecté à l'interface de terminal, destiné à émettre une troisième requête, à destination du terminal, de transmission du paramètre d'identification,
- un récepteur connecté à l'interface de terminal, destiné à recevoir un message émis par le terminal comprenant ledit paramètre d'identification.

Enfin, l'invention concerne un terminal destiné à communiquer avec un équipement multimédia, ledit équipement multimédia comportant une interface de terminal vers ledit terminal, caractérisé en ce qu'il comporte :
- un émetteur, à destination de l'équipement multimédia, d'une première requête pour obtenir un paramètre d'identification autorisant un accès à un module de configuration de l'équipement multimédia, ladite première requête étant transmise à l'équipement multimédia via un équipement intermédiaire auquel il est connecté,
- un récepteur d'un message émis par l'équipement multimédia comprenant le paramètre d'identification requis, ledit message étant transmis au terminal via l'équipement intermédiaire auquel il est connecté,
- un émetteur, vers l'équipement multimédia, d'une seconde requête pour accéder au module de configuration, ladite seconde requête étant reçue au travers de l'interface de terminal,
- un récepteur d'une troisième requête de transmission du paramètre d'identification émise pas l'équipement multimédia,
- un émetteur d'un message émis comprenant ledit paramètre d'identification, ledit message étant reçu au travers de l'interface de terminal.

Selon d'autres aspects, l'invention concerne également des programmes d'ordinateur comprenant des instructions de code de programme pour la mise en œuvre des étapes des procédés de configuration d'un équipement multimédia et de communication décrits précédemment, lorsque ces programmes sont exécutés par un ordinateur.

Chacun des programmes d'ordinateur décrits ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur tel que décrit précédemment.

Le support d'informations peut être n'importe quelle entité ou dispositif capable de stocker le programme. Par exemple, le support peut comporter un moyen de stockage, tel qu'une ROM (pour *"Read Only Memory"*), par exemple un CD ROM ou une ROM de circuit microélectronique, ou encore un moyen d'enregistrement magnétique, par exemple une disquette (*floppy disc*) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation décrits en référence aux dessins dans lesquels :
- la figure 1 représente un réseau domestique comprenant une passerelle domestique et un équipement multimédia auxquels sont connectés d'autres équipements,
- la figure 2 représente un réseau de communication domestique dans lequel le procédé objet de l'invention est mis en œuvre,
- la figure 3 représente les étapes d'une méthode de configuration de l'équipement multimédia,
- la figure 4 représente un équipement multimédia apte à mettre en œuvre le procédé objet de l'invention,
- la figure 5 représente un terminal apte à mettre en œuvre le procédé objet de l'invention.

La **figure 2** représente un réseau de communication domestique comprenant plusieurs équipements connectés entre eux. Un tel réseau domestique comprend une passerelle domestique GW permettant de connecter le réseau domestique avec le réseau d'un opérateur en télécommunication via un réseau d'accès filaire ou radio.

Un équipement multimédia HP est connecté à la passerelle domestique GW soit au moyen d'une connexion filaire, telle qu'un câble Ethernet, soit au moyen d'une connexion sans fil de type WIFI par exemple, au travers d'une interface de service IS. Un tel équipement multimédia HP embarque plusieurs fonctionnalités telles que la génération d'un réseau WIFI dit visiteur, distinct du réseau WIFI pouvant être généré par la passerelle domestique GW, de recharge de batteries de téléphones mobile par induction, etc. L'équipement multimédia HP comprend également différents types de connecteurs tels que des ports UBS (*Universal Serial Bus*), ou encore des prises HDMI (*High Definition Multimedia Interface*), qui permettent de connecter différents équipements, tels que des clés USB ou des téléviseurs à l'équipement multimédia HP.

La connexion établie entre la passerelle domestique GW et l'équipement multimédia HP est une connexion sécurisée. Lorsque la connexion entre ces deux équipements est de type filaire la sécurité de cette connexion est assurée par la nature filaire et donc point à point de la connexion filaire. Lorsque la connexion entre ces deux équipements est une connexion WIFI, l'équipement multimédia HP doit être authentifié auprès de la passerelle domestique GW afin de pouvoir établir la connexion avec la passerelle domestique GW. Pour cela un code de sécurité, tel qu'une clé WAP (*Wireless Application Protocol*) ou une clé WEP (*Wired Equivalent Privacy*), est saisie au travers d'une interface utilisateur de l'équipement multimédia HP et transmise à la passerelle domestique GW afin de finaliser la connexion avec l'équipement multimédia HP.

Un premier terminal UE1 est également connecté à la passerelle domestique GW soit au moyen d'une connexion filaire, telle qu'un câble Ethernet, soit au moyen d'une connexion sans fil, en fonction de la nature du terminal UE1. Par exemple, si le terminal UE1 est un ordinateur de bureau, la connexion avec la passerelle domestique GW est une connexion filaire ; et si le terminal UE1 est un Smartphone ou une tablette, la connexion avec la passerelle domestique GW est une connexion sans fil. Tout comme pour la connexion établie entre l'équipement multimédia HP et la passerelle domestique GW, la connexion établie entre la passerelle domestique GW et le terminal UE1 est une connexion sécurisée.

Un second terminal UE2, tel qu'un Smartphone, est connecté à l'équipement multimédia HP via un réseau WIFI visiteur généré par l'équipement multimédia HP et au travers d'une interface de terminal IT. La connexion établie entre le terminal UE2 et l'équipement multimédia HP peut être ou non sécurisée. Une fois connecté à l'équipement multimédia HP, le terminal UE2 peut échanger des données, telles que par exemple des données multimédia, avec un terminal connecté au réseau domestique ou directement avec l'équipement multimédia HP.

L'équipement multimédia HP peut également fonctionner dans une situation de nomadisme, c'est à sans être connecté à une passerelle domestique GW. Dans une telle situation, l'équipement multimédia HP n'est pas connecté au réseau d'un opérateur en télécommunication. L'équipement multimédia HP peut néanmoins générer un réseau WIFI visiteur et ainsi permettre l'échange de données entre différents terminaux connectés à l'équipement multimédia HP au travers de l'interface de terminal IT.

L'équipement multimédia HP comporte un module de configuration qui permet à l'utilisateur de configurer différents paramètres liés à certaines fonctions que peut exécuter l'équipement multimédia HP. Par exemple, il est possible de configurer les paramètres relatifs au réseau WIFI visité généré par l'équipement multimédia HP tel que le mot de passe requis pour se connecter à ce réseau WIFI visité.

Lorsqu'ils sont tous deux connectés à la passerelle domestique GW, le terminal UE1 peut accéder au module de configuration de l'équipement multimédia HP afin de configurer les différents paramètres de fonctionnement de l'équipement multimédia HP. Ceci est possible du fait que le terminal UE1 et l'équipement multimédia HP sont connectés de manière sécurisée à la passerelle domestique GW. Ainsi, le terminal UE1 peut accéder au travers de la passerelle domestique GW, et donc au travers de l'interface de service IS, au module de configuration de l'équipement multimédia HP.

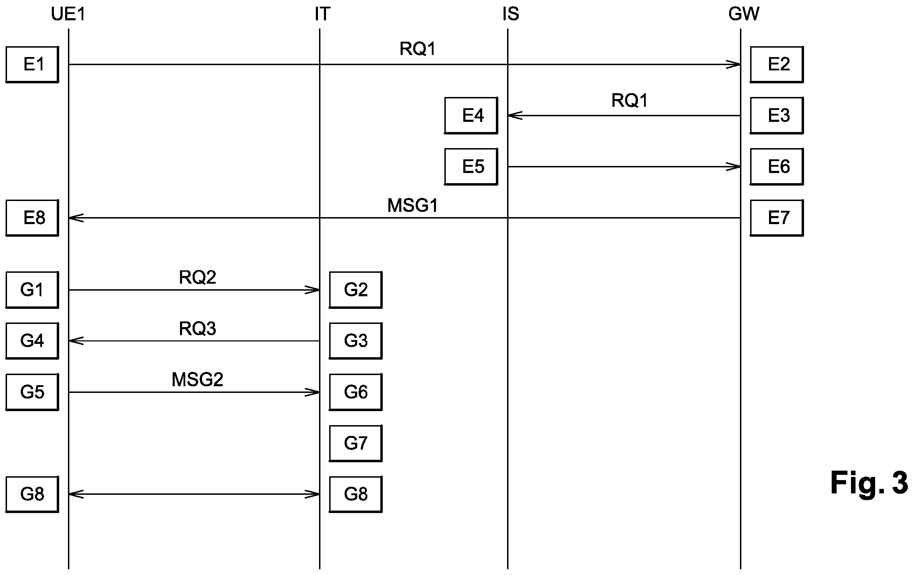

La **figure 3** représente les étapes d'une méthode de configuration de l'équipement multimédia lorsque le terminal UE1 ne peut accéder à l'équipement multimédia HP qu'au travers de l'interface de terminal IT, c'est-à-dire via le réseau WIFI visité. Le procédé de configuration comprend deux phases : une phase d'initialisation et une phase de configuration.

Au cours de la phase d'initialisation, le terminal UE1 et l'équipement multimédia sont tous les deux connectés à la passerelle domestique GW.

Dans une étape E1, le terminal E1 émet, à destination de l'équipement intermédiaire HP, d'une première requête RQ1 pour obtenir un paramètre d'identification autorisant un accès à au module de configuration de l'équipement multimédia HP. La requête RQ1 est interceptée par la passerelle domestique GW au cours d'une étape E2.

La passerelle domestique GW transmet alors la requête RQ1 à l'équipement multimédia HP au cours d'une étape E3.

Au cours d'une étape E4, l'équipement multimédia HP reçoit, au travers de l'interface de service IS, la requête RQ1 émise par le terminal UE1 pour obtenir un paramètre d'identification autorisant un accès au module de configuration de l'équipement multimédia HP.

La requête RQ1 ayant été reçue au travers de l'interface de service IS, c'est-à-dire au moyen d'une connexion sécurisée, l'équipement multimédia HP est autorisé à répondre à cette requête RQ1.

Ainsi au cours d'une étape E5, l'équipement multimédia HP émet, au travers de l'interface de service IS, un message MSG1 à destination du terminal UE1comprenant le paramètre d'identification requis.

Le message MGS1 est intercepté par la passerelle domestique GW au cours d'une étape E6.

La passerelle domestique GW transmet alors le message MSG1 comprenant le paramètre d'identification requis au terminal UE1 au cours d'une étape E7.

Après réception du message MSG1 par le terminal UE1, le paramètre d'identification requis est stocké dans une mémoire du terminal UE1 en vue d'une utilisation ultérieure au cours d'une étape E8.

Au cours de la phase de configuration, l'équipement multimédia est en situation de nomadisme, c'est à dire qu'il n'est pas connecté à la passerelle domestique GW. Dans ce cas de figure, le terminal UE1 et l'équipement multimédia sont connecté l'un à l'autre au travers du réseau WIFI visité généré par l'équipement multimédia HP. Dans un autre mode de réalisation de l'invention, l'équipement multimédia HP est connecté à la passerelle domestique GW mais le terminal UE1 est connecté à l'équipement multimédia HP vi le réseau WIFI visité généré par l'équipement multimédia HP.

Ainsi au cours d'une étape G1, le terminal UE1 émet, à destination de l'équipement multimédia HP, une seconde requête RQ2 pour accéder au module de configuration de l'équipement multimédia HP.

Au cours d'une étape G2, l'équipement intermédiaire HP identifie l'interface au travers de laquelle il a reçu la requête RQ2.

Lorsque l'équipement multimédia HP identifie que la requête RQ2 a été reçue au travers de l'interface de terminal IT, l'équipement multimédia HP émet, au travers de l'interface de terminal IT, une troisième requête RQ3, à destination du terminal UE1, de transmission du paramètre d'identification au cours d'une étape G3.

Au cours d'une étape G4, le terminal UE1 reçoit la troisième requête RQ3 de transmission du paramètre d'identification émise pas l'équipement multimédia.

Au cours d'une étape G6, le terminal UE1 émet, à destination de l'équipement multimédia HP, un message MSG2 comprenant ledit paramètre d'identification préalablement stocké dans une mémoire du terminal UE1.

Le message MSG3 comprenant ledit paramètre d'identification est reçu par l'équipement multimédia HP au travers de l'interface de terminal IT au cours d'une étape G6.

Au cours d'une étape G7, l'équipement multimédia HP identifie le terminal UE1 au moyen du paramètre d'identification et autorise le terminal UE1 à accéder à son module de configuration.

Au cours d'une étape G8, le terminal UE1 et l'équipement multimédia échangent des données de configuration saisies au travers d'une interface utilisateur de l'équipement multimédia HP affichée sur un écran du terminal UE1.

Un tel procédé de configuration permet de restreindre l'accès au module de configuration de l'équipement multimédia HP aux seuls terminaux ayant obtenus un paramètre d'identification délivré par l'équipement multimédia HP au travers de la passerelle domestique. Ainsi, tout terminal UE2 se connectant au réseau WIFI visité généré par l'équipement multimédia HP se voit refuser l'accès au module de configuration de l'équipement multimédia HP.

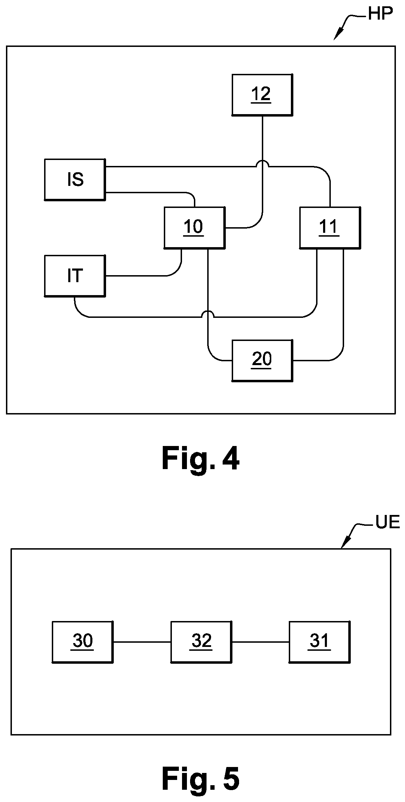

La **figure 4** représente un équipement multimédia HP apte à mettre en œuvre le procédé objet de l'invention.

L'équipement multimédia HP est destiné à être connecté à une passerelle domestique GW auprès duquel il est authentifié au travers d'une interface de service IS, et à au moins un terminal UE1, UE2, au travers d'une interface de terminal IT.

L'équipement multimédia HP comprend un récepteur 10 connecté à l'interface de service IS, destiné à recevoir une première requête émise par le terminal UE1 pour obtenir un paramètre d'identification autorisant un accès à un module de configuration 20 de l'équipement multimédia HP.

L'équipement multimédia HP comprend un émetteur 11 connecté à l'interface de service IS, destiné à émettre un message à destination du terminal UE1 comprenant le paramètre d'identification requis.

L'équipement multimédia HP comprend un module d'identification 12 de l'interface par laquelle une deuxième requête émise par le terminal UE1 pour accéder au module de configuration est reçue. Le module d'identification 12 est connecté au récepteur 10.

L'émetteur 11 est également connecté à l'interface de terminal IT, et permet d'émettre une troisième requête, à destination du terminal UE1, de transmission du paramètre d'identification.

Le récepteur 10 est également connecté à l'interface de terminal IT, et permet de recevoir un message émis par le terminal UE1 comprenant ledit paramètre d'identification.

Le module de configuration 20 est connecté au récepteur 10 et à l'émetteur 11.

La **figure 5** représente un terminal UE1 apte à mettre en œuvre le procédé objet de l'invention.

Le terminal UE1 est destiné à communiquer avec l'équipement multimédia HP.

Le terminal UE1 comprend un émetteur30 permettant d'émettre une première requête à destination de l'équipement multimédia HP pour obtenir un.

Le terminal UE1 comprend un récepteur 31 permettant de recevoir un message émis par l'équipement multimédia HP comprenant le paramètre d'identification requis.

Le terminal UE1 comprend, connecté à l'émetteur 30 et au récepteur 31 une mémoire 32 dans laquelle le paramètre d'identification autorisant un accès à un module de configuration de l'équipement multimédia HP est destiné à être stocké.

## Revendications

1. Procédé de configuration d'un équipement multimédia destiné à être connecté:
- via un réseau de communication dit « réseau domestique » généré par un équipement d'interconnexion, audit équipement d'interconnexion auprès duquel il est authentifié, ledit équipement d'interconnexion (GW) étant une passerelle domestique permettant d'interconnecter ledit réseau domestique et le réseau d'un opérateur, et
- par l'intermédiaire de l'équipement d'interconnexion et via ledit réseau domestique, ainsi que via un réseau dit « réseau visiteur » distinct dudit réseau domestique et généré par ledit équipement multimédia, à au moins un terminal, ledit équipement multimédia comportant une interface de service vers l'équipement d'interconnexion et une interface de terminal vers ledit terminal, **caractérisé en ce qu'**il comporte au cours d'une phase d'initialisation mise en œuvre via le réseau domestique :
- une étape de réception, au travers de l'interface de service, d'une première requête émise par le terminal pour obtenir un paramètre d'identification autorisant un accès à un module de configuration de l'équipement multimédia, ledit terminal étant authentifié auprès de l'équipement d'interconnexion,
- une étape de transmission, au travers de l'interface de service, d'un message à destination du terminal comprenant le paramètre d'identification requis,
et **en ce qu'**il comporte au cours d'une phase de configuration de l'équipement multimédia mise en œuvre via le réseau visiteur :
- une étape d'identification de l'interface par laquelle une deuxième requête émise par le terminal pour accéder au module de configuration est reçue,
- lorsque la seconde requête est reçue au travers de l'interface de terminal, une étape d'émission, au travers de l'interface de terminal, d'une troisième requête, à destination du terminal, de transmission du paramètre d'identification,
- une étape de réception, au travers de l'interface de terminal, d'un message émis par le terminal comprenant ledit paramètre d'identification.

2. Procédé de communication entre un terminal et un équipement multimédia, ledit équipement multimédia étant destiné à être connecté :
- via un réseau de communication dit « réseau domestique » généré par un équipement d'interconnexion, audit équipement d'interconnexion auprès duquel il est authentifié, ledit équipement d'interconnexion (GW) étant une passerelle domestique permettant d'interconnecter ledit réseau domestique et le réseau d'un opérateur, et
- par l'intermédiaire de l'équipement d'interconnexion et via ledit réseau domestique, ainsi que via un réseau dit « réseau visiteur » distinct dudit réseau domestique et généré par ledit équipement multimédia, audit terminal,
ledit équipement multimédia comportant une interface de service vers l'équipement d'interconnexion et une interface de terminal vers ledit terminal, **caractérisé en ce qu'**il comporte au cours d'une phase d'initialisation mise en œuvre via le réseau domestique :
- une étape d'émission, à destination de l'équipement multimédia, d'une première requête pour obtenir un paramètre d'identification autorisant un accès à un module de configuration de l'équipement multimédia, ladite première requête étant transmise à l'équipement multimédia au travers de l'interface de service et via l'équipement intermédiaire auquel il est connecté,
- une étape de réception d'un message émis par l'équipement multimédia au travers de l'interface de service et comprenant le paramètre d'identification requis, ledit message étant transmis au terminal via l'équipement intermédiaire auquel il est connecté,
et **en ce qu'**il comporte au cours d'une phase de configuration de l'équipement multimédia mise en œuvre via le réseau visiteur :
- une étape d'émission, vers l'équipement multimédia, d'une seconde requête pour accéder au module de configuration, ladite seconde requête étant reçue au travers de l'interface de terminal,
- une étape de réception d'une troisième requête de transmission du paramètre d'identification émise pas l'équipement multimédia,
- une étape d'émission d'un message émis comprenant ledit paramètre d'identification, ledit message étant reçu au travers de l'interface de terminal.

3. Equipement multimédia destiné à être connecté :
- via un réseau de communication dit « réseau domestique » généré par un équipement d'interconnexion, audit équipement d'interconnexion auprès duquel il est authentifié ledit équipement d'interconnexion (GW) étant une passerelle domestique permettant d'interconnecter ledit réseau domestique et le réseau d'un opérateur, et
- par l'intermédiaire de l'équipement d'interconnexion et via ledit réseau domestique, ainsi que via un réseau dit « réseau visiteur » distinct dudit réseau domestique et généré par ledit équipement multimédia, à au moins un terminal, ledit équipement multimédia comportant une interface de service vers l'équipement d'interconnexion et une interface de terminal vers ledit terminal, **caractérisé en ce qu'**il comporte :
- un récepteur connecté à l'interface de service, destiné à recevoir une première requête émise par le terminal via le réseau domestique pour obtenir un paramètre d'identification autorisant un accès à un module de configuration de l'équipement multimédia, ledit terminal étant authentifié auprès de l'équipement d'interconnexion,
- un émetteur connecté à l'interface de service, destiné à émettre via le réseau domestique un message à destination du terminal comprenant le paramètre d'identification requis,
- un module d'identification de l'interface par laquelle une deuxième requête émise par le terminal via le réseau visiteur pour accéder au module de configuration est reçue,
- un émetteur connecté à l'interface de terminal, destiné à émettre via le réseau visiteur une troisième requête, à destination du terminal, de transmission du paramètre d'identification,
- un récepteur connecté à l'interface de terminal, destiné à recevoir un message émis par le terminal via le réseau visiteur comprenant ledit paramètre d'identification.

4. Terminal (UE1) destiné à communiquer avec un équipement multimédia (HP), ledit équipement multimédia (HP) étant destiné à être connecté :
- via un réseau de communication dit « réseau domestique » généré par un équipement d'interconnexion (GW), audit équipement d'interconnexion (GW) auprès duquel il est authentifié, ledit équipement d'interconnexion (GW) étant une passerelle domestique permettant d'interconnecter ledit réseau domestique et le réseau d'un opérateur, et
- par l'intermédiaire de l'équipement d'interconnexion (GW) et via ledit réseau domestique, ainsi que via un réseau dit « réseau visiteur » distinct dudit réseau domestique et généré par ledit équipement multimédia (HP), audit terminal (UE1),
ledit équipement multimédia (HP) comportant une interface de service (IS) vers l'équipement d'interconnexion (GW) et une interface de terminal (IT) vers ledit terminal (UE1),
ledit terminal (UE1) étant **caractérisé en ce qu'**il comporte :
- des moyens de connexion avec ledit équipement d'interconnexion (GW) ;
- un émetteur configuré pour émettre, (E1) à destination de l'équipement multimédia (HP) et via le réseau domestique, une première requête (RQ1) pour obtenir un paramètre d'identification autorisant un accès à un module de configuration de l'équipement multimédia (HP), ladite première requête étant interceptée (E2) par l'équipement d'interconnexion (GW) et transmise (E3) par l'équipement d'interconnexion (GW) à l'équipement multimédia (HP) au travers de l'interface de service (IS),
- un récepteur configuré pour recevoir (E7) de l'équipement d'interconnexion (GW) un message (MSG1) émis (E5) par l'équipement multimédia (HP) au travers de l'interface de service (IS) via le réseau domestique, ledit message (MSG1) émis (E5) par l'équipement multimédia (HP) étant intercepté (E6) par l'équipement d'interconnexion (GW) et transmis (E7) audit terminal (UE1), ledit message comprenant le paramètre d'identification requis,
- une mémoire pour stocker le paramètre d'identification compris dans le message reçu en provenance de l'équipement multimédia, ledit paramètre d'identification autorisant l'accès audit module de configuration de l'équipement multimédia (HP) ;
- des moyens de connexion à l'équipement multimédia (HP) via ledit réseau visiteur distinct dudit réseau domestique et généré par ledit équipement multimédia (HP),
- un émetteur configuré pour envoyer (G1), vers l'équipement multimédia (HP) et via le réseau visiteur, une seconde requête (RQ2) pour accéder au module de configuration, ladite seconde requête étant reçue par l'équipement multimédia (HP) au travers de l'interface de terminal (IT),
- un récepteur configuré pour recevoir (G4) une troisième requête (RQ3) de transmission du paramètre d'identification émise par l'équipement multimédia (HP) via le réseau visiteur,
- un émetteur configuré pour émettre (G6) un message (MSG2) via le réseau visiteur et comprenant ledit paramètre d'identification,
ledit terminal (UE1) étant configuré pour accéder au module de configuration du terminal multimédia (HP) après que ledit équipement multimédia (HP) a identifié ledit terminal (UE1) au moyen dudit paramètre d'identification et autorisé ledit terminal (UE1) à accéder à son module de configuration.

5. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en œuvre du procédé de configuration d'un équipement multimédia selon la revendication 1 lorsque ledit programme est exécuté par un ordinateur.

6. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en œuvre du procédé de communication entre un terminal et un équipement multimédia selon la revendication 2 **lorsque** ledit programme est exécuté par un ordinateur.

## Patentansprüche

1. Verfahren zur Konfiguration einer Multimediavorrichtung, die dazu bestimmt ist, verbunden zu werden:
- über ein Kommunikationsnetzwerk, "Heimnetzwerk" genannt, das von einer Verbindungsvorrichtung erzeugt wird, mit dieser Verbindungsvorrichtung, an der sie authentifiziert wird, wobei die Verbindungsvorrichtung (GW) ein Heimgateway ist, welches ermöglicht, das Heimnetzwerk und das Netzwerk eines Betreibers miteinander zu verbinden, und
- über die Verbindungsvorrichtung und über das Heimnetzwerk sowie über ein "Besuchernetzwerk" genanntes Netzwerk, das von dem Heimnetzwerk verschieden ist und von der Multimediavorrichtung erzeugt wird, mit mindestens einem Endgerät, wobei die Multimediavorrichtung eine Serviceschnittstelle für die Verbindungsvorrichtung und eine Endgerätschnittstelle für das Endgerät aufweist, **dadurch gekennzeichnet, dass** es während einer Initialisierungsphase, die über das Heimnetzwerk durchgeführt wird, umfasst:
- einen Schritt des Empfangs, über die Serviceschnittstelle, einer von dem Endgerät gesendeten ersten Anforderung, um einen Identifikationsparameter zu erhalten, der einen Zugang zu einem Konfigurationsmodul der Multimediavorrichtung autorisiert, wobei das Endgerät an der Verbindungsvorrichtung authentifiziert wird,
- einen Schritt der Übertragung, über die Serviceschnittstelle, einer Nachricht an das Endgerät, die den angeforderten Identifikationsparameter umfasst, und dadurch, dass es während einer Konfigurationsphase der Multimediavorrichtung, die über das Besuchernetzwerk durchgeführt wird, umfasst:
- einen Schritt der Identifikation der Schnittstelle, durch welche eine von dem Endgerät gesendete zweite Anforderung, um auf das Konfigurationsmodul zuzugreifen, empfangen wird,
- wenn die zweite Anforderung über die Endgerätschnittstelle empfangen wird, einen Schritt des Sendens, über die Endgerätschnittstelle an das Endgerät, einer dritten Anforderung zur Übertragung des Identifikationsparameters,
- einen Schritt des Empfangs, über die Endgerätschnittstelle, einer von dem Endgerät gesendeten Nachricht, die den Identifikationsparameter umfasst.

2. Verfahren zur Kommunikation zwischen einem Endgerät und einer Multimediavorrichtung, wobei die Multimediavorrichtung dazu bestimmt ist, verbunden zu werden:
- über ein Kommunikationsnetzwerk, "Heimnetzwerk" genannt, das von einer Verbindungsvorrichtung erzeugt wird, mit dieser Verbindungsvorrichtung, an der sie authentifiziert wird, wobei die Verbindungsvorrichtung (GW) ein Heimgateway ist, welches ermöglicht, das Heimnetzwerk und das Netzwerk eines Betreibers miteinander zu verbinden, und
- über die Verbindungsvorrichtung und über das Heimnetzwerk sowie über ein "Besuchernetzwerk" genanntes Netzwerk, das von dem Heimnetzwerk verschieden ist und von der Multimediavorrichtung erzeugt wird, mit dem Endgerät,
wobei die Multimediavorrichtung eine Serviceschnittstelle für die Verbindungsvorrichtung und eine Endgerätschnittstelle für das Endgerät aufweist, **dadurch gekennzeichnet, dass** es während einer Initialisierungsphase, die über das Heimnetzwerk durchgeführt wird, umfasst:
- einen Schritt des Sendens, an die Multimediavorrichtung, einer ersten Anforderung, um einen Identifikationsparameter zu erhalten, der einen Zugang zu einem Konfigurationsmodul der Multimediavorrichtung autorisiert, wobei diese erste Anforderung an die Multimediavorrichtung über die Serviceschnittstelle und über die Vermittlungsvorrichtung, mit der sie verbunden ist, übertragen wird,
- einen Schritt des Empfangs einer Nachricht, die von der Multimediavorrichtung über die Serviceschnittstelle gesendet wurde und den angeforderten Identifikationsparameter umfasst, wobei die Nachricht an das Endgerät über die Vermittlungsvorrichtung, mit der es verbunden ist, übertragen wird,
und dadurch, dass es während einer Konfigurationsphase der Multimediavorrichtung, die über das Besuchernetzwerk durchgeführt wird, umfasst:
- einen Schritt des Sendens, an die Multimediavorrichtung, einer zweiten Anforderung, um auf das Konfigurationsmodul zuzugreifen, wobei die zweite Anforderung über die Endgerätschnittstelle empfangen wird,
- einen Schritt des Empfangs einer dritten Anforderung zur Übertragung des Identifikationsparameters, die von der Multimediavorrichtung gesendet wurde,
- einen Schritt des Sendens einer gesendeten Nachricht, die den Identifikationsparameter umfasst, wobei die Nachricht über die Endgerätschnittstelle empfangen wird.

3. Multimediavorrichtung, die dazu bestimmt ist, verbunden zu werden:
- über ein Kommunikationsnetzwerk, "Heimnetzwerk" genannt, das von einer Verbindungsvorrichtung erzeugt wird, mit dieser Verbindungsvorrichtung, an der sie authentifiziert wird, wobei die Verbindungsvorrichtung (GW) ein Heimgateway ist, welches ermöglicht, das Heimnetzwerk und das Netzwerk eines Betreibers miteinander zu verbinden, und
- über die Verbindungsvorrichtung und über das Heimnetzwerk sowie über ein "Besuchernetzwerk" genanntes Netzwerk, das von dem Heimnetzwerk verschieden ist und von der Multimediavorrichtung erzeugt wird, mit mindestens einem Endgerät, wobei die Multimediavorrichtung eine Serviceschnittstelle für die Verbindungsvorrichtung und eine Endgerätschnittstelle für das Endgerät aufweist, **dadurch gekennzeichnet, dass** sie aufweist:
- einen mit der Serviceschnittstelle verbundenen Empfänger, der dazu bestimmt ist, eine von dem Endgerät über das Heimnetzwerk gesendete erste Anforderung zu empfangen, um einen Identifikationsparameter zu erhalten, der einen Zugang zu einem Konfigurationsmodul der Multimediavorrichtung autorisiert, wobei das Endgerät an der Verbindungsvorrichtung authentifiziert wird,
- einen mit der Serviceschnittstelle verbundenen Sender, der dazu bestimmt ist, über das Heimnetzwerk eine Nachricht an das Endgerät zu senden, die den angeforderten Identifikationsparameter umfasst,
- ein Modul zur Identifikation der Schnittstelle, durch welche eine von dem Endgerät über das Besuchernetzwerk gesendete zweite Anforderung, um auf das Konfigurationsmodul zuzugreifen, empfangen wird,
- einen mit der Endgerätschnittstelle verbundenen Sender, der dazu bestimmt ist, über das Besuchernetzwerk eine dritte Anforderung an das Endgerät zur Übertragung des Identifikationsparameters zu senden,
- einen mit der Endgerätschnittstelle verbundenen Empfänger, der dazu bestimmt ist, eine von dem Endgerät über das Besuchernetzwerk gesendete Nachricht zu empfangen, die den Identifikationsparameter umfasst.

4. Endgerät (UE1), welches dazu bestimmt ist, mit einer Multimediavorrichtung (HP) zu kommunizieren, wobei die Multimediavorrichtung (HP) dazu bestimmt ist, verbunden zu werden:
- über ein Kommunikationsnetzwerk, "Heimnetzwerk" genannt, das von einer Verbindungsvorrichtung (GW) erzeugt wird, mit dieser Verbindungsvorrichtung (GW), an der sie authentifiziert wird, wobei die Verbindungsvorrichtung (GW) ein Heimgateway ist, welches ermöglicht, das Heimnetzwerk und das Netzwerk eines Betreibers miteinander zu verbinden, und
- über die Verbindungsvorrichtung (GW) und über das Heimnetzwerk sowie über ein "Besuchernetzwerk" genanntes Netzwerk, das von dem Heimnetzwerk verschieden ist und von der Multimediavorrichtung (HP) erzeugt wird, mit dem Endgerät (UE1),
wobei die Multimediavorrichtung (HP) eine Serviceschnittstelle (IS) für die Verbindungsvorrichtung (GW) und eine Endgerätschnittstelle (IT) für das Endgerät (UE1) aufweist,
wobei das Endgerät (UE1) **dadurch gekennzeichnet ist, dass** es aufweist:
- des moyens de connexion avec ledit équipement d'interconnexion (GW) ;Mittel zur Verbindung mit der Verbindungsvorrichtung (GW);
- einen Sender, der dafür ausgelegt ist, an die Multimediavorrichtung (HP) und über das Heimnetzwerk eine erste Anforderung (RQ1) zu senden (E1), um einen Identifikationsparameter zu erhalten, der einen Zugang zu einem Konfigurationsmodul der Multimediavorrichtung (HP) autorisiert, wobei die erste Anforderung von der Verbindungsvorrichtung (GW) abgefangen (E2) und von der Verbindungsvorrichtung (GW) an die Multimediavorrichtung (HP) über die Serviceschnittstelle (IS) übertragen wird (E3),
- einen Empfänger, der dafür ausgelegt ist, von der Verbindungsvorrichtung (GW) eine Nachricht (MSG1) zu empfangen (E7), die von der Multimediavorrichtung (HP) über die Serviceschnittstelle (IS) über das Heimnetzwerk gesendet wurde (E5), wobei diese von der Multimediavorrichtung (HP) gesendete (E5) Nachricht (MSG1) von der Verbindungsvorrichtung (GW) abgefangen (E6) und an das Endgerät (UE1) übertragen wird (E7), wobei die Nachricht den angeforderten Identifikationsparameter umfasst,
- einen Speicher zum Speichern des Identifikationsparameters, der in der empfangenen, von der Multimediavorrichtung kommenden Nachricht enthalten ist, wobei der Identifikationsparameter den Zugang zum Konfigurationsmodul der Multimediavorrichtung (HP) autorisiert;
- Mittel zur Verbindung mit der Multimediavorrichtung (HP) über das Besuchernetzwerk, das von dem Heimnetzwerk verschieden ist und von der Multimediavorrichtung (HP) erzeugt wird,
- einen Sender, der dafür ausgelegt ist, an die Multimediavorrichtung (HP) und über das Besuchernetzwerk eine zweite Anforderung (RQ2) zu senden(G1), um auf das Konfigurationsmodul zuzugreifen, wobei die zweite Anforderung von der Multimediavorrichtung (HP) über die Endgerätschnittstelle (IT) empfangen wird,
- einen Empfänger, der dafür ausgelegt ist, eine dritte Anforderung (RQ3) zur Übertragung des Identifikationsparameters zu empfangen (G4), die von der Multimediavorrichtung (HP) über das Besuchernetzwerk gesendet wurde,
- einen Sender, der dafür ausgelegt ist, eine Nachricht (MSG2) über das Besuchernetzwerk zu senden (G6), die den Identifikationsparameter umfasst,
wobei das Endgerät (UE1) dafür ausgelegt ist, auf das Konfigurationsmodul der Multimediavorrichtung (HP) zuzugreifen, nachdem die Multimediavorrichtung (HP) das Endgerät (UE1) mittels des Identifikationsparameters identifiziert hat und das Endgerät (UE1) autorisiert hat, auf sein Konfigurationsmodul zuzugreifen.

5. Computerprogrammprodukt, das aus einem Kommunikationsnetz herunterladbar und/oder auf einem computerlesbaren Medium aufgezeichnet und/oder von einem Prozessor ausführbar ist, **dadurch gekennzeichnet, dass** es Programmcodeanweisungen zur Durchführung des Verfahrens zur Konfiguration einer Multimediavorrichtung nach Anspruch 1, wenn dieses Programm von einem Computer ausgeführt wird, umfasst.

6. Computerprogrammprodukt, das aus einem Kommunikationsnetz herunterladbar und/oder auf einem computerlesbaren Medium aufgezeichnet und/oder von einem Prozessor ausführbar ist, **dadurch gekennzeichnet, dass** es Programmcodeanweisungen zur Durchführung des Verfahrens zur Kommunikation zwischen einem Endgerät und einer Multimediavorrichtung nach Anspruch 2, wenn dieses Programm von einem Computer ausgeführt wird, umfasst.

## Claims

1. Method for configuring a multimedia equipment intended to be connected:
- via a communication network known as a "home network" generated by an interconnection equipment, to said interconnection equipment to which it is authenticated, said interconnection equipment (GW) being a home gateway for interconnecting said home network and the network of an operator, and
- by means of the interconnection equipment and via said home network, and also via a network known as a "visitor network" distinct from said home network and generated by said multimedia equipment, to at least one terminal, said multimedia equipment comprising a service interface to the interconnection equipment and a terminal interface to said terminal, **characterized in that** it comprises, during an initialization phase implemented via the home network:
- a step of receiving, through the service interface, a first request sent by the terminal to obtain an identification parameter authorizing access to a configuration module of the multimedia equipment, said terminal being authenticated to the interconnection equipment,
- a step of transmitting, through the service interface, a message to the terminal including the requisite identification parameter,
and **in that** it comprises, during a configuration phase to configure the multimedia equipment, implemented via the visitor network:
- a step of identifying the interface by which a second request sent by the terminal to access the configuration module is received,
- when the second request is received through the terminal interface, a step of sending, through the terminal interface, a third request, to the terminal, to transmit the identification parameter,
- a step of receiving, through the terminal interface, a message sent by the terminal including said identification parameter.

2. Method for communication between a terminal and a multimedia equipment, said multimedia equipment being intended to be connected:
- via a communication network known as a "home network" generated by an interconnection equipment, to said interconnection equipment to which it is authenticated, said interconnection equipment (GW) being a home gateway for interconnecting said home network and the network of an operator, and
- by means of the interconnection equipment and via said home network, and also via a network known as a "visitor network" distinct from said home network and generated by said multimedia equipment, to said terminal, said multimedia equipment comprising a service interface to the interconnection equipment and a terminal interface to said terminal, **characterized in that** it comprises, during an initialization phase implemented via the home network:
- a step of sending, to the multimedia equipment, a first request to obtain an identification parameter authorizing access to a configuration module of the multimedia equipment, said first request being transmitted to the multimedia equipment through the service interface and via the intermediate equipment to which it is connected,
- a step of receiving a message sent by the multimedia equipment through the service interface and including the requisite identification parameter, said message being transmitted to the terminal via the intermediate equipment to which it is connected,
and **in that** it comprises, during a configuration phase to configure the multimedia equipment, implemented via the visitor network:
- a step of sending, to the multimedia equipment, a second request to access the configuration module, said second request being received through the terminal interface,
- a step of receiving a third request to transmit the identification parameter sent by the multimedia equipment,
- a step of sending a sent message including said identification parameter, said message being received through the terminal interface.

3. Multimedia equipment to be connected:
- via a communication network known as a "home network" generated by an interconnection equipment, to said interconnection equipment to which it is authenticated, said interconnection equipment (GW) being a home gateway for interconnecting said home network and the network of an operator, and
- by means of the interconnection equipment and via said home network, and also via a network known as a "visitor network" distinct from said home network and generated by said multimedia equipment, to at least one terminal, said multimedia equipment comprising a service interface to the interconnection equipment and a terminal interface to said terminal, **characterized in that** it comprises:
- a receiver connected to the service interface, intended to receive a first request sent by the terminal via the home network to obtain an identification parameter authorizing access to a configuration module of the multimedia equipment, said terminal being authenticated to the interconnection equipment,
- a transmitter connected to the service interface, intended to send via the home network a message to the terminal including the requisite identification parameter,
- an identification module of the interface by which a second request sent by the terminal via the visitor network to access the configuration module is received,
- a transmitter connected to the terminal interface, intended to send via the visitor network a third request, to the terminal, to transmit the identification parameter,
- a receiver connected to the terminal interface, intended to receive a message sent by the terminal via the visitor network including said identification parameter.

4. Terminal (UE1) for communicating with a multimedia equipment (HP), said multimedia equipment (HP) being intended to be connected:
- via a communication network known as a "home network" generated by an interconnection equipment (GW), to said interconnection equipment (GW) to which it is authenticated, said interconnection equipment (GW) being a home gateway for interconnecting said home network and the network of an operator, and
- by means of the interconnection equipment (GW) and via said home network, and also via a network known as a "visitor network" distinct from said home network and generated by said multimedia equipment (HP), to said terminal (UE1),
said multimedia equipment (HP) comprising a service interface (IS) to the interconnection equipment (GW) and a terminal interface (IT) to said terminal (UE1),
said terminal (UE1) being **characterized in that** it comprises:
- connecting means to connect to said interconnection equipment (GW);
- a transmitter configured to send, (EI) to the multimedia equipment (HP) and via the home network, a first request (RQ1) to obtain an identification parameter authorizing access to a configuration module of the multimedia equipment (HP), said first request being intercepted (E2) by the interconnection equipment (GW) and transmitted (E3) by the interconnection equipment (GW) to the multimedia equipment (HP) through the service interface (IS),
- a receiver configured to receive (E7) from the interconnection equipment (GW) a message (MSG1) sent (E5) by the multimedia equipment (HP) through the service interface (IS) via the home network, said message (MSG1) sent (E5) by the multimedia equipment (HP) being intercepted (E6) by the interconnection equipment (GW) and transmitted (E7) to said terminal (UE1), said message including the requisite identification parameter,
- a memory for storing the identification parameter included in the message received from the multimedia equipment, said identification parameter authorizing access to said configuration module of the multimedia equipment (HP);
- connecting means to connect to the multimedia equipment (HP) via said visitor network distinct from said home network and generated by said multimedia equipment (HP),
- a transmitter configured to send (G1), to the multimedia equipment (HP) and via the visitor network, a second request (RQ2) to access the configuration module, said second request being received by the multimedia equipment (HP) through the terminal interface (IT),
- a receiver configured to receive (G4) a third request (RQ3) to transmit the identification parameter sent by the multimedia equipment (HP) via the visitor network,
- a transmitter configured to send (G6) a message (MSG2) including said identification parameter via the visitor network,
said terminal (UE1) being configured to access the configuration module of the multimedia terminal (HP) after said multimedia equipment (HP) has identified said terminal (UE1) by means of said identification parameter and authorized said terminal (UE1) to access its configuration module.

5. Computer program product downloadable from a communications network and/or stored on a computer-readable medium and/or executable by a processor, **characterized in that** it comprises program code instructions for performing the method for configuring a multimedia equipment according to Claim 1 when said program is executed by a computer.

6. Computer program product downloadable from a communications network and/or stored on a computer-readable medium and/or executable by a processor, **characterized in that** it comprises program code instructions for performing the method for communication between a terminal and a multimedia equipment according to Claim 2 when said program is executed by a computer.
